**Europäisches Patentamt**

**European Patent Office**

**Office européen des brevets**

(19)

(11) Veröffentlichungsnummer : **0 470 390 B1**

## (12) EUROPÄISCHE PATENTSCHRIFT

(45) Veröffentlichungstag der Patentschrift :
**01.09.93 Patentblatt 93/35**

(51) Int. Cl.⁵ : **F01N 1/06,** F01N 3/28,
F01N 7/04

(21) Anmeldenummer : **91111593.9**

(22) Anmeldetag : **12.07.91**

(54) **Abgasanlage eines Mehrzylinder-Hubkolbenmotors.**

(30) Priorität : **04.08.90 DE 4024803**

(43) Veröffentlichungstag der Anmeldung :
**12.02.92 Patentblatt 92/07**

(45) Bekanntmachung des Hinweises auf die
Patenterteilung :
**01.09.93 Patentblatt 93/35**

(84) Benannte Vertragsstaaten :
**DE ES FR GB IT NL**

(56) Entgegenhaltungen :
**DE-B- 1 035 973**
**US-A- 1 740 805**
**US-A- 4 926 635**

(73) Patentinhaber : **Dr.Ing.h.c. F. Porsche**
**Aktiengesellschaft**
**Porschestrasse 42**
**D-70435 Stuttgart (DE)**

(72) Erfinder : **Rutschmann, Erwin, Dipl.-Ing.**
**Schönblickstrasse 21**
**W-7533 Tiefenbronn (DE)**
Erfinder : **Ehinger, Peter, Dipl.-Ing. (FH)**
**Elmestrasse 58**
**W-7257 Hirschlanden (DE)**

**Beschreibung**

Die Erfindung betrifft eine Abgasanlage eines Mehrzylinder-Hubkolbenmotors nach dem Oberbegriff des Anspruchs 1.

Eine derartige Abgasanlage ist in US-PS 4 408 675 beschrieben. Die von zwei Zylinderreihen eines Hubkolbenmotors ausgehenden Abgasleitungen münden in einen Zwischenraum zwischen zwei Resonanzschalldämpfern ein, werden dort wieder in Teilströme aufgeteilt, durchströmen in gegenläufigen Richtungen die Resonanzschalldämpfer und treten durch Endrohre aus, die seitlich an den Resonanzschalldämpfern angebracht sind. Diese Bauform wird unter anderem deshalb gewählt, um ein der Verkaufsförderung dienendes, markant röhrendes Abgasgeräusch des Motors zu erzielen.

Aus der Zeitschrift Autotechnik Nr. 4 - 1990, Seite 21, ist ein Verfahren zur Dämpfung des Abgasgeräusches eines Verbrennungsmotors bekannt, bei dem die an der Abgasleitung angebrachten Lautsprecher Gegengeräusche in spiegelverkehrter Form zu den Schallwellen der Abgase erzeugen. Die um 180° gegeneinander phasenverschobenen Schallwellen der Lautsprecher und des Abgases löschen sich durch Interferenz gegenseitig aus bzw. verringern gegenseitig ihre Lautstärke zu einem Flüsterton.

Es ist die Aufgabe der Erfindung, durch eine besondere konstruktive Gestaltung der Abgasleitung ohne den Einbau von teuren Zusatzgeräten das nach außen dringende Abgasgeräusch eines Hubkolbenmotors zu verringern. Dabei sollte jedoch der typische, im Fahrgastraum hörbare Motorsound, der insbesondere Sportwagenfahrer begeistert, nicht verlorengehen.

Zur Lösung dieser Aufgabe dienen die kennzeichnenden Merkmale des Anspruchs 1. Da der gegenseitige Abstand der Abgasendrohre so bemessen ist, daß sich Interferenz der aus ihnen austretenden Abgas-Schallwellen ergibt, läßt sich auf einfache Weise eine erhebliche Absenkung des nach außen dringenden Abgasgeräusches erzielen. Wenn der Abstand der Endrohre gleich der halben Wellenlänge der Abgasschallwellen ist, löschen sich diese aus den beiden Endrohren kommenden Schallwellen in der Austrittsebene der Endrohre, die zugleich die Abhörebene darstellt, völlig aus. Da das Abgasgeräusch jedoch nicht aus einer einzigen Frequenz und Längenwelle sondern einem ganzen Frequenzspektrum bestehen kann, läßt sich das am Straßenrand hörbare Mündungsgeräusch aus den Endrohren lediglich in einem abgestimmten Frequenzbereich reduzieren.

Ein Ausführungsbeispiel der Erfindung ist in der Zeichnung dargestellt und wird nachfolgend erläutert.

Es zeigen:

Fig. 1    Draufsicht auf ein Kraftfahrzeug und Ausbreitung der Abgasschallwellen des Hubkolbenmotors,

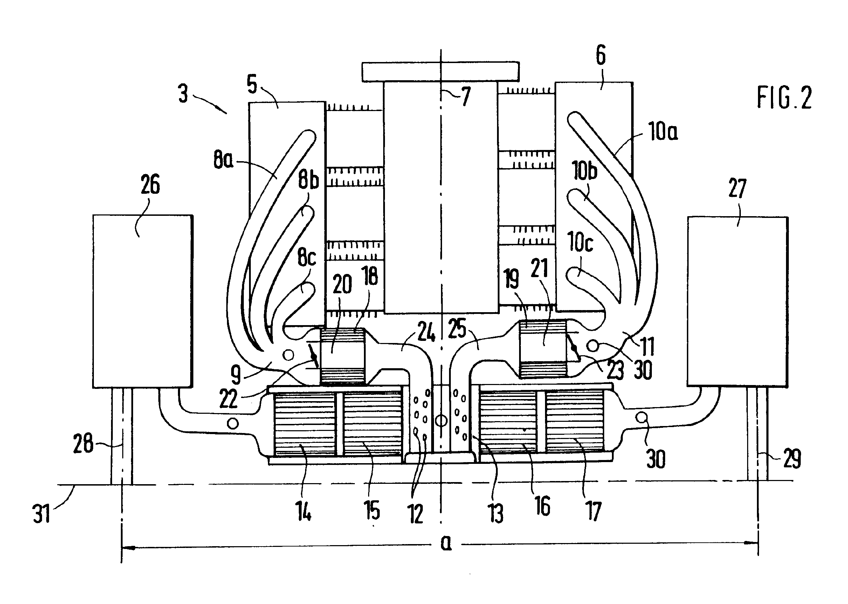

Fig. 2    Hubkolbenmotor mit Abgasanlage,

Fig. 3    Diagramm: Abgas - Geräuschpegel,

Fig. 4    schematische Darstellung einer abgewandelten Abgasanlage.

Ein Kraftfahrzeug, in dessen Heckbereich 1 zwischen den Hinterrädern 2 ein Hubkolbenmotor 3 angeordnet ist, fährt an einem seitlich zur Straße aufgestellten Mikrophon 4 vorbei, das die Geräusche des Kraftfahrzeugs aufnimmt. Der als Sechszylinder-Boxermotor ausgeführte Hubkolbenmotor 3 besitzt zwei Zylinderreihen 5 und 6, die sich mit einem Winkel von 180° symmetrisch zur Motorlängsachse 7 gegenüberliegen. Von der linken Zylinderreihe 5 gehen Abgaskrümmer 8a, 8b, 8c ab, die sich in einem linken Sammelrohr 9 vereinigen. Die von der rechten Zylinderreihe 6 ausgehenden Abgaskrümmer 10a, 10b, 10c werden in einem rechten Sammelrohr 11 zusammengeführt. Das linke 9 und das rechte Sammelrohr 11 sind gegenläufig zueinander um 90° abgewinkelt und münden mit mehreren Radialöffnungen 12 in einen Zwischenraum 13 zwischen linken Katalysatoren 14, 15 und rechten Katalysatoren 16, 17 ein. Parallel liegend zu diesen Katalysatoren sind in die Sammelrohre 9 und 11 Startkatalysatoren 18 und 19 eingesetzt, deren zentrale Durchtrittsöffnungen 20, 21 durch Drehklappen 22, 23 verschließbar sind.

An die linken Katalysatoren 14, 15 bzw. rechten Katalysatoren 16, 17 sind Abgasrohre 24 bzw. 25 angeschlossen, in denen das Abgas einem linken Schalldämpfer 26 bzw. einem rechten Schalldämpfer 27 zugeführt wird und anschließend durch ein linkes Endrohr 28 bzw. rechtes Endrohr 29 ins Freie austritt.

Vor beiden Drehklappen 22 und 23, in dem Zwischenraum 13 sowie in Strömungsrichtung hinter den Katalysatoren 14, 17 sind Lambdasonden 30 angeordnet.

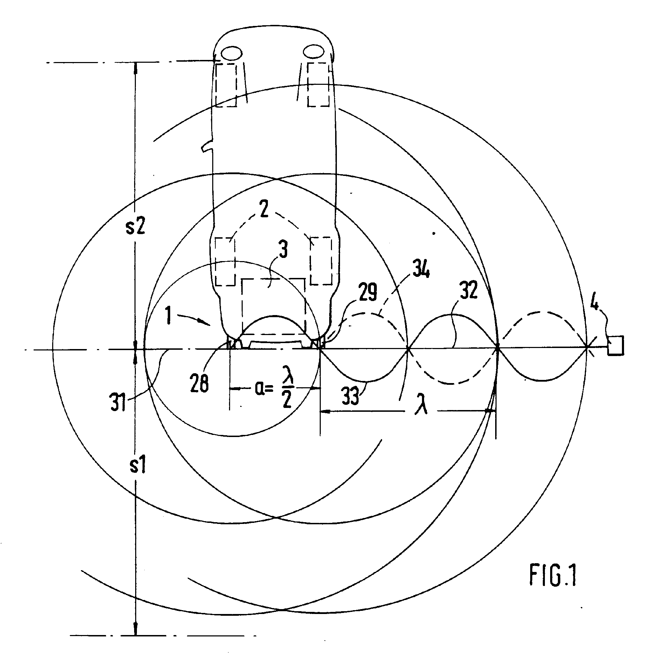

In Fig. 1 ist die Abgas-Austrittsebene 31 der Endrohre 28, 29, die senkrecht liegt zur Längserstreckung der Endrohre und sie nach hinten begrenzt, deckungsgleich mit der senkrecht zur Straße mittig zum Mikrophon 4 liegenden Abhörebene 32. Bei einer bestimmten, diskreten Frequenz, die z.B. bei einem 6-Zylinder-Boxermotor ca. 125 Hz beträgt, hat sowohl die aus dem linken Endrohr 28 austretende Schallwelle 33 als auch die aus dem rechten Endrohr 29 austretende Schallwelle 34 in der Abhörebene 32 einen sinusförmigen Verlauf. Wenn die Abgasleitungen der beiden Zylinderreihen 5, 6 in ihren Gesamtlängen und Querschnitten gleich und mit ihren Krümmungen und mit ihren Katalysator-Einbauten symmetrisch zur Motorlängsachse 7 gestaltet sind, sind die sinusförmigen Schwingungsamplituden der Schallwellen 33 und 34 einander gleich. Da der gegen-

2

seitige Abstand a der beiden Endrohre 28, 29 so groß bemessen ist, wie die halbe Wellenlänge $\lambda$ der Schwingungen 33, 34, sind die beiden Schwingungen exakt um $\lambda/2$ zueinander phasenverschoben. Einem Wellenberg der einen Schwingung 34 steht ein gleichgestaltetes Wellental der anderen Schwingung gegenüber. Somit löschen sich im Idealfall die beiden Schwingungen 33, 34 durch Interferenz gegenseitig vollkommen aus. Am Mikrophon 4 ist kein Mündungsgeräusch zu hören.

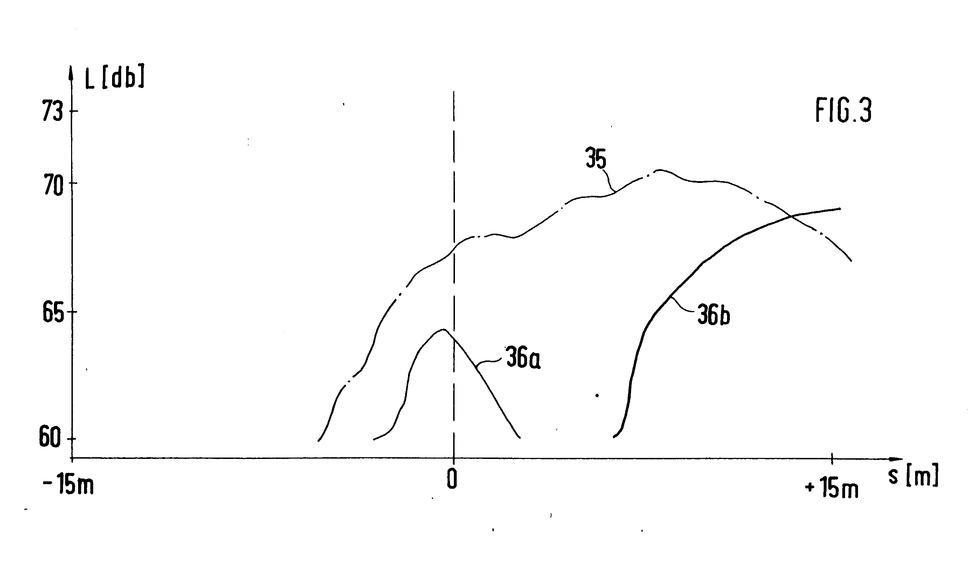

Wie Fig. 3 zeigt, wird in Wirklichkeit dieser Idealzustand zwar nicht erreicht; es wird aber eine deutliche Absenkung des Mündungsgeräusches erzielt. In diesem Diagramm ist der am Mikophon 4 gemessene Geräuschpegel in dB über dem Abstand s aufgetragen, den die Abgas-Austrittsebene 31 der Endrohre 28, 29 zur Abhörebene 32 hat. Ist s = 0 m, so fluchten die Abgas-Austrittsebene 31 und die Abhörebene 32. Bei s1 = -15 m ist die Austrittsebene 31 um 15 m zur Abhörebene nach rückwärts, bei s2 = +15 m um 15 m nach vorwärts versetzt.

Die obere Kurve 35 bezeichnet das vom Mikrophon 4 aufgenommene Mündungsgeräusch in dB bei einem 6-Zylinder-Boxermotor mit herkömmlicher Abgasanlage. Die beiden anderen Kurvenäste 36a und 36b sind Geräusch-Meßkurven einer erfindungsgemäß ausgeführten Abgasanlage. Die Meßkurven 35, 36a und 36b wurden bei einer Motordrehzahl von ca. 2500 l/min aufgenommen. Der Abstand a der beiden Endrohre beträgt aus konstruktiven Gründen ca. 1 m.

Wie die folgende Berechnung für einen 6-Zylinder-Motor mit zwei Zylinderreihen zeigt, stellt dieser gewählte Abstand a einen Kompromiß zwischen den konstruktiven Möglichkeiten und den schalltechnischen Erfordernissen dar.

An einem 6-Zylinder-Motor puffen pro Kurbelwellenumdrehung jeweils 3 Zylinder aus. Bei einer Motordrehzahl n1 = 2300 1/min beträgt die Frequenz f1 der Abgasschallwelle in Hz

$$f1 \; = \; \frac{3 \cdot n1}{60} \; = \; \frac{3 \cdot 2300 \; 1/min}{60} \; = \; 115 \; Hz$$

Bei einer Motordrehzahl n2 = 2700 1/min ergibt sich

$$f2 \; = \; \frac{3 \cdot n2}{60} \; = \; 135 \; Hz$$

Für die Messung wurde der Drehzahlbereich 2300 1/min bis 2700 1/min bzw. der zugehörige Frequenzbereich 115 Hz bis 135 Hz gewählt, weil in diesem Bereich die gesetzlich zulässigen Höchstwerte der Schadstoff- und Geräuschemissionen getestet werden.

Die Wellenlänge $\lambda$ läßt sich aus den beiden Gleichungen

$$c \; = \; \lambda \cdot f$$
$$c \; = \; \sqrt{\kappa \cdot R \cdot T}$$

berechnen zu

$$\lambda \; = \; \frac{\sqrt{\kappa \cdot R \cdot T}}{f}$$

wobei bedeutet

c =         Schallgeschwindigkeit in m/sec.
$\kappa$ =         Adiabatenexponent = 1,4
R =         rel. Gaskonstante = 287 J/Kg $\cdot$ K
T =         absolute Temperatur = 293 K

Mit den gewählten Mittelwerten von R, T ergibt sich

$$\lambda 1 \; = \; 2{,}98 \; m$$
$$\lambda 2 \; = \; 2{,}54 \; m$$

nach der Vorschrift

$$a \; = \; \frac{\lambda}{2}$$

wäre also aus akustischen Gründen in einem Fall

$$a1 \; = \; \frac{\lambda 1}{2} \; = \; 1{,}5 \; m$$

$$a2 \; = \; \frac{\lambda 2}{2} \; = \; 1{,}28 \; m$$

festzulegen. Aus Bauraumgründen wurde ein Abstand a von 1,0 m gewählt, so daß sich zwar keine Geräuschauslöschung aber doch eine sehr starke Geräuschdämpfung ergibt.

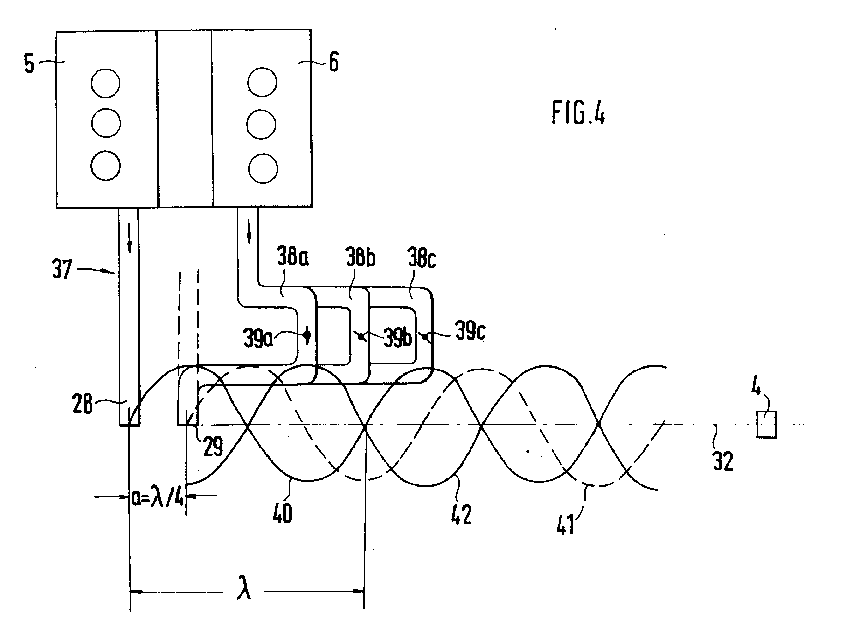

Wenn aus baulichen Gründen der Endrohrabstand a kleiner als $\lambda/2$ sein muß, bietet sich die Möglichkeit, eine Geräuschdämpfung durch Interferenz dadurch zu erzielen, daß die von den beiden Zylinderreihen ausgehenden Abgasleitungen mit einer unterschiedlichen Gesamtlänge ausgeführt werden. Diese abgewandelte Ausführungsform der Erfindung ist in Fig. 4 dargestellt.

Eine von der linken Zylinderreihe 5 ausgehende Abgasleitung 37 mündet in dem Endrohr 28 aus, eine abgebogene Abgasleitung 38a der rechten Zylinderreihe 6 mündet in dem Endrohr 29 aus. Die rechte Abgasleitung 38a ist um das Maß l länger als die linke Abgasleitung 37. Die Abgasleitung 38a ist durch eine Drehklappe 39a verschließbar. Parallel zu der Abgasleitung 38a sind an ihr zwei weitere Abgasleitungen 38b bzw. 38c angeschlossen, die durch Drehklappen 39b bzw. 39c verschließbar sind und um das Maß $\Delta l 2$ zw. $\Delta l 3$ länger sind als die gerade Abgasleitung 37. Jeweils zwei Drehklappen sind geschlossen; die die dritte, offene Drehklappe enthaltende Abgasleitung ist zugeschaltet.

In dieser Ausführungsform der Erfindung beträgt der Abstand a der Endrohre $\lambda/4$. Aus dem Endrohr 28 tritt eine Schallwelle 40 aus. Wäre die Abgasleitung 38a gleich lang (gestrichelt gezeichnet) wie die Abgasleitung 37, so hätte die aus ihr austretende Schallwelle 41 (strichpunktiert gezeichnet) gegenüber der Schallwelle 40 eine Phasenverschiebung von $\lambda/4$. Da jedoch die Abgasleitung 38a um die Größe $\Delta 1$ deutlich länger ist als die Abgasleitung 37, tritt infolge des Laufzeitunterschiedes der Gaswellen in den Abgasleitungen eine zusätzliche Phasenverschiebung auf. Die sich so in der Abhörebene 32 ergebende, am Mikrophon 4 ankommende Schallwelle 42 ist gegenüber der Schallwelle 40 um $\lambda/2$ verschoben und es erfolgt theoretisch aufgrund von Interferenz eine vollständige gegenseitige Geräuschauslöschung. Die hierfür nötige Verlängerung $\Delta 1$ des Abgasstranges 38a errechnet sich folgendermaßen:

Aus den Gleichungen

$$Cu = \frac{\Delta l \, u}{t}$$

$$Ci = \frac{\Delta l}{t}$$

wird

$$\Delta lu = \Delta l \cdot \frac{Cu}{Ci}$$

und mit

$$\Delta lu = \frac{\lambda u}{2} - a$$

folgt die Beziehung

$$\Delta 1 = \left( \frac{\lambda u}{2} - a \right) \cdot \frac{Ci}{Cu}$$

hierin bedeuten:

Cu = Schallgeschwindigkeit in der Umgebungsluft
Ci = Schallgeschwindigkeit in der Abgasleitung
t = Laufzeit der Schallwelle
$\Delta lu$ = Längenabstand der Schallwellen in der Umgebungsluft, die aus den beiden Endrohren kommen
$\Delta l$ = Längendifferenz der beiden Abgasleitungen
$\lambda u$ = Wellenlänge in der Umgebungsluft
a = Abstand der Endrohre

Ist beispielsweise

$$\lambda u = 3,0 \, m \approx \lambda 1$$

$$a = \frac{\lambda u}{4}$$

$$Ci = 636 \, \frac{m}{s}$$

$$Cu = 340 \, \frac{m}{s}$$

So wird:

$$\Delta l = \left( \frac{\lambda_u}{2} - \frac{\lambda_u}{4} \right) \cdot \frac{636}{340}$$

$$\Delta l = 1,4 \text{ m}$$

Wenn aus baulichen Gründen der Endrohrabstand a nur mit a = 0,75m bemessen werden kann, läßt sich trotzdem eine Auslöschung der Schallwellen durch Interferenz erreichen, indem man die rechte Abgasleitung 38a um das Maß $\Delta l$ = 1,4 m länger macht als die linke Abgasleitung 37. Durch Zuschalten der nochmals verlängerten Abgasleitungen 38b oder 38c kann man die Frequenz, bei der eine Schwingungsauslöschung erfolgt, variieren.

**Patentansprüche**

1. Abgasanlage eines in ein Kraftfahrzeug eingebauten Mehrzylinder-Hubkolbenmotors, dessen Abgase durch zwei auf Abstand zueinander liegende Endrohre hindurch ins Freie ausströmen, dadurch gekennzeichnet, daß der Abstand (a) der Endrohre (28, 29) so bemessen ist, daß sich zumindest über einen Teil des Motordrehzahlbereichs eine Abgasgeräuschdämpfung durch Interferenz der aus den Endrohren (28, 29) austretenden Schallwellen (33, 34) ergibt.

2. Abgasanlage nach Anspruch 1, dadurch gekennzeichnet, daß die Endrohre (28, 29) zueinander parallel im Heckbereich (1) des Kraftfahrzeugs angeordnet sind.

3. Abgasanlage nach Anspruch 1 und 2 für einen Motor mit zwei parallelen Zylinderreihen (5, 6), dadurch gekennzeichnet, daß die beiden Abgasleitungen jeder der beiden Zylinderreihen getrennt verlegt sind und in einem Endrohr (28 bzw. 29) auslaufen.

4. Abgasanlage nach Anspruch 3 für einen 6-Zylinder-Boxermotor, dadurch gekennzeichnet, daß der Abstand (a) der Endrohre 0,8 m bis 1, 2 m beträgt.

5. Abgasanlage nach Anspruch 3 oder 4, dadurch gekennzeichnet, daß die Abgasleitungen der beiden Zylinderreihen (5, 6) im Querschnitt und in der Gesamtlänge gleich bemessen sind.

6. Abgasanlage nach Anspruch 3, 4 oder 5, dadurch gekennzeichnet, daß die Abgasleitungen der Zylinderreihen (5, 6) mehrere Krümmungen aufweisen, die symmetrisch zu der zwischen den beiden Endrohren (28, 29) gelegenen Motorlängsachse (7) liegen.

7. Abgasanlage nach einem der Ansprüche 3 bis 6, dadurch gekennzeichnet, daß eine Abgasleitung aus den an der einen Zylinderreihe (5) angeschlossenen Abgasrohren (8a, 8b, 8c), einem Abgassammelrohr (9), mindestens einem Katalysator (14) und einem Schalldämpfer (26) sowie einem Endrohr (28) zusammengesetzt ist.

8. Abgasanlage nach Anspruch 3, dadurch gekennzeichnet, daß die den beiden Zylinderreihen (5, 6) zugeordneten Abgasleitungen (37, 38a) um ein Maß $\Delta l$ unterschiedlich lang sind.

9. Abgasanlage nach Anspruch 8, dadurch gekennzeichnet, daß zu der längeren Abgasleitung (38a) weitere Abgasleitungen (38b) bzw. (38c) parallel liegen, die um ein Maß $\Delta l$2 bzw. $\Delta l$3 länger sind als die Abgasleitung (37).

10. Abgasanlage nach Anspruch 9, dadurch gekennzeichnet, daß die Abgasleitungen (38a, 38b, 38c) durch Drehklappen (39a, 39b, 39c) verschließbar sind.

## Claims

1. An exhaust arrangement of a multiple-cylinder reciprocating-piston engine fitted in a motor vehicle and the exhaust gases of which flow out into the open air through two tail pipes arranged at a distance from each other, **characterized in that** the distance (a) between the tail pipes (28, 29) is dimensioned in such a way that at least over part of the engine speed range an exhaust sound-proofing results from interference of the sound waves (33, 34) emerging from the tail pipes (28, 29).

2. An exhaust arrangement according to Claim 1, **characterized in that** the tail pipes (28, 29) are arranged parallel to each other in the tail area (1) of the motor vehicle.

3. An exhaust arrangement according to Claims 1 and 2 for an engine with two parallel rows of cylinders (5, 6), **characterized in that** the two exhaust ducts of each of the two rows of cylinders are positioned separately and emerge in a tail pipe (28 and 29 respectively).

4. An exhaust arrangement according to Claim 3 for an opposed 6-cylinder engine, **characterized in that** the distance (a) between the tail pipes amounts to between 0·8 m and 1·2 m.

5. An exhaust arrangement according to Claim 3 or 4, **characterized in that** the exhaust ducts of the two rows of cylinders (5, 6) have equal dimensions in cross-section and in overall length.

6. An exhaust arrangement according to Claims 3, 4 or 5, **characterized in that** the exhaust ducts of the two rows of cylinders (5, 6) have a plurality of bends arranged symmetrically to the longitudinal axis (7) of the engine situated between the two tail pipes (28, 29).

7. An exhaust arrangement according to Claims 3 to 6, **characterized in that** an exhaust duct is made up of the exhaust pipes (8a, 8b, 8c) connected to one row of cylinders (5), an exhaust collecting pipe (9), at least one catalyst (14) and a silencer (26) as well as a tail pipe (28).

8. An exhaust arrangement according to Claim 3, **characterized in that** the exhaust ducts (37, 38a) associated with the two rows of cylinders (5, 6) are of different lengths by an amount $\Delta l$.

9. An exhaust arrangement according to Claim 8, **characterized in that** further exhaust ducts (38b) and (38c), longer than the exhaust duct (37) by an amount $\Delta l2$ and $\Delta l3$ respectively, are arranged parallel to the longer exhaust duct (38a).

10. An exhaust arrangement according to Claim 9, **characterized in that** the exhaust ducts (38a, 38b, 38c) are closable by throttle valves (39a, 39b, 39c).


## Revendications

1. Système d'échappement pour moteur à pistons multicylindre, monté dans un véhicule automobile, dont les gaz d'échappement s'échappent à l'air libre au moyen de deux tubes d'extrémité espacés, caractérisé en ce que l'espacement (a) entre les tubes d'extrémités (28, 29) est tel qu'au moins sur une partie de la plage de rotation du moteur, se produit un amortissement des bruits d'échappement par interférence entre les ondes acoustiques (33, 34) sortant des tubes d'extrémité (28, 29).

2. Système d'échappement selon la revendication 1, caractérisé en ce que les tubes d'extrémité (28, 29) sont disposés parallèlement, dans la zone arrière (1) du véhicule automobile.

3. Système d'échappement selon les revendications 1 et 2, pour un moteur à deux rangées de cylindres 5, 6 parallèles, caractérisé en ce que les deux conduites de gaz d'échappement de chacune des deux rangées de cylindres sont décalées et viennent déboucher dans un tube d'extrémité (28 ou 29).

4. Système de gaz d'échappement selon la revendication 3, pour un moteur boxer à six cylindres, caractérisé en ce que l'espacement (a) entre les tubes d'extrémité est de 0,8 à 1,2 m.

5. Système d'échappement selon la revendication 3 ou 4, caractérisé en ce que les conduites du gaz d'échappement des deux rangées de cylindres 5, 6 ont une section transversale et une longueur totale identiques.

6. Système d'échappement selon la revendication 3, 4 ou 5, caractérisé en ce que les conduites du gaz d'échappement des rangées de cylindres 5, 6, présentent plusieurs coudes, situés symétriquement par rapport à l'axe longitudinale du moteur (7) placé entre les deux tubes d'extrémité (28, 29).

7. Système d'échappement selon l'une des revendications 3 à 6, caractérisé en ce qu'une conduite du gaz d'échappement est composée des tubes de gaz d'échappement (8a, 8b, 8c) raccordés à une rangée de cylindres (5), d'un tube collecteur de gaz d'échappement (9), d'au moins un catalyseur (14) et d'un silencieux (26) ainsi que d'un tube d'extrémité (28).

8. Système d'échappement selon la revendication 3, caractérisé en ce que les conduites du gaz d'échappement (37a, 38a) associées aux deux rangées de cylindres (5, 6), sont d'une longueur qui diffère l'une de l'autre d'une distance $\Delta 1$.

9. Système d'échappement selon la revendication 8, caractérisé en ce que d'autres conduites de gaz d'échappement (38b), ou (38c) sont disposées parallèlement à la conduite de gaz d'échappement (38a) la plus longue et leur longueur étant plus grande, d'une valeur $\Delta 12$, ou $\Delta 13$ par rapport à la conduite du gaz d'échappement 37.

10. Système d'échappement selon la revendication 9, caractérisé en ce que les conduites du gaz d'échappement (38a, 38b, 38c) sont obturables aux moyens de volets rotatifs (39a, 39b, 39c).

7

FIG.1

FIG.2

FIG.3

EP 0 470 390 B1

FIG.4

EP 0 470 390 B1